# EUROPEAN PATENT APPLICATION

(11) **EP 4 393 362 A1**
(43) Date of publication of application: **03.07.2024**
(21) Application number: 23214950.0
(22) Date of filing: 07.12.2023
(51) Int. Cl.: A47J 43/07, B01F 27/00

(54) **SYSTEMS AND METHODS FOR QUIET BLENDERS**

(30) Priority: 14.12.2022 US 202263432488 P
(71) Applicant: Vita-Mix Management Corporation, Olmsted Township, OH 44138 (US)
(72) Inventor: KOZLOWSKI, Eugene J., Olmsted Township, 44138 (US)
(74) Representative: Budde Schou A/S

(57) **Abstract**

Provided are methods, systems, and apparatuses for instituting a quiet blending mode. A method includes capturing, via at least one sensor, one or more sound and/or vibration inputs from a blender, comparing the one or more sound and/or vibration inputs to a threshold parameter, and transmitting a command to a blender motor to reduce power when the one or more sound and/or vibration inputs exceed the threshold parameter.

## Description

### CROSS-REFERENCE TO RELATED APPLICATION

The present disclosure claims the priority benefit of U.S. Provisional Patent Application Serial No. 63/432,488, filed December 14, 2022 and entitled "SYSTEMS AND METHODS FOR QUIET BLENDERS," the entire contents of which is incorporated by reference herein.

### TECHNICAL FIELD

The present disclosure relates to blender systems and, more particularly, to systems and methods for reducing sound in a blender system.

### BACKGROUND

Blenders and blending systems are often used to blend and process foodstuffs. Frozen, frosty, or icy drinks have become increasingly popular. Such drinks include the traditional shakes, and the more recently popular smoothies. Shakes, or milk shakes, are typically formed of ice cream and/or milk, and flavored as desired, with or without additives, such as candies, chocolates, peanut butter, fruits, etc. Milkshakes typically are available at most fast-food restaurants, such as burger chains, and may be made by special machines, or hand-made using mixers.

Smoothies tend to be healthier, and may be formed of ice, frozen yogurt, and/or sorbet. Smoothies may include additives such as fruits, fruit juice, vegetables, vitamins, supplements, etc. Smoothies typically are available from specialty chains or juice bars, and may be made with commercial or restaurant-grade blenders. Such drinks also may be made at home, using a personal blender. Other types of foodstuff may be processed using commercial or personal blending machines and systems, including soups, purees, butter (nut), dips or the like.

Given the wide variety of uses for blenders and different environments in which they may be used, the blenders may be loud when in use and such sound may be undesirable to certain individuals in certain environments. For example, blenders that have a powerful motor can be loud. In another example, blenders that run at higher speeds may be louder than blenders that run at slower speeds. Excessive noise can also be produced by blending content at high speeds. The ingredients and blending pattern may also contribute to or cause loud sound. Therefore, a need exists for improved systems and methods for reducing the sound of a blender during blending processes.

### SUMMARY

The following presents a summary of this disclosure to provide a basic understanding of some aspects. This summary is intended to neither identify key or critical elements nor define any limitations of embodiments or claims. This summary may provide a simplified overview of some aspects that may be described in greater detail in other portions of this disclosure. Furthermore, any of the described aspects may be isolated or combined with other described aspects without limitation to the same effect as if they had been described separately and in every possible combination explicitly.

In one aspect, a method of instituting a quiet blending mode includes capturing, via at least one sensor, one or more sound and/or vibration inputs from a blender, comparing the one or more sound and/or vibration inputs to a threshold parameter, and transmitting a command to a blender motor to reduce power when the one or more sound and/or vibration inputs exceed the threshold parameter.

In another aspect, a system for instituting a quiet blending mode includes a blender having a motor, a capture component having at least one sensor configured to capture one or more sound and/or vibration inputs from the blender, and a controller communicatively coupled to the motor and the capture component. The controller is configured to instruct the at least one sensor to capture the one or more sound and/or vibration inputs from the blender, compare the one or more sound and/or vibration inputs to a threshold parameter, and instruct the motor to reduce power when the one or more sound and/or vibration inputs exceed the threshold parameter.

In yet another aspect, a blender includes a motor and a controller communicatively coupled to the motor. The controller is configured to capture, via at least one sensor, one or more sound and/or vibration inputs from the motor, compare the one or more sound and/or vibration inputs to a threshold parameter, and instruct the motor to reduce power when the one or more sound and/or vibration inputs exceed the threshold parameter.

### DESCRIPTION OF THE DRAWINGS

The accompanying drawings illustrate various systems, apparatuses, devices and methods, in which like reference characters refer to like parts throughout, and in which:
FIG. 1 is a block diagram of an illustrative embodiment of a blender system in accordance with various disclosed aspects herein;
FIG. 2 is an environmental view of an illustrative embodiment of a blender system in accordance with various disclosed aspects herein;
FIG. 3 depicts an illustrative user interface displayed on a user device of a blender system in accordance with various disclosed aspects herein;
FIG. 4 depicts another illustrative user interface displayed on a user device of a blender system in accordance with various disclosed aspects herein;
FIG. 5 is a flow diagram of an embodiment of an illustrative method associated with a blender system in accordance with various disclosed aspects herein;
FIG. 6 is a flow diagram of an embodiment of an illustrative method associated with a blender system in accordance with various disclosed aspects herein;
FIG. 7 is an environmental diagram of an illustrative communication system in accordance with various disclosed aspects herein;
FIG. 8 is a block diagram of an illustrative computer system in accordance with various disclosed aspects herein; and
FIG. 9 is a front view of an illustrative blending system in accordance with various disclosed aspects herein.

The present disclosure may be embodied in several forms without departing from its spirit or essential characteristics. The scope of the present disclosure is defined in the appended claims, rather than in the specific description preceding them. All embodiments that fall within the meaning and range of equivalency of the claims are therefore intended to be embraced by the claims.

### DETAILED DESCRIPTION

Reference will now be made to illustrative embodiments, examples of which are illustrated in the accompanying drawings. It is to be understood that other embodiments may be utilized and structural and functional changes may be made. In addition, features of the various embodiments may be combined or altered. As such, the following description is presented by way of illustration only and should not limit in any way the various alternatives and modifications that may be made to the illustrated embodiments. In this disclosure, numerous specific details provide a thorough understanding of the subject disclosure. It should be understood that aspects of this disclosure may be practiced with other embodiments not necessarily including all aspects described herein, etc.

As used herein, the words "example" and "exemplary" mean an instance, or illustration. The words "example" or "exemplary" do not indicate a key or preferred aspect or embodiment. The word "or" is intended to be inclusive rather an exclusive, unless context suggests otherwise. As an example, the phrase "A employs B or C," includes any inclusive permutation (e.g., A employs B; A employs C; or A employs both B and C). As another matter, the articles "a" and "an" are generally intended to mean "one or more" unless context suggest otherwise.

In addition, terms such as "access point," "server," and the like, are utilized interchangeably, and refer to a network component or appliance that serves and receives control data, voice, video, sound, or other data-stream or signaling-stream. Data and signaling streams may be packetized or frame-based flows. Furthermore, the terms "user," "customer," "consumer," and the like are employed interchangeably throughout the subject specification, unless context suggests otherwise or warrants a particular distinction among the terms. It is noted that such terms may refer to human entities or automated components supported through artificial intelligence (e.g., a capacity to make inference). Still further, "user," "customer," "consumer," may include a commercial establishment(s), such as a restaurant, restaurant chain, commercial kitchen, grocery store, convenience store, ice-cream shop, smoothie restaurant, or the likes.

"Logic" refers to any information and/or data that may be applied to direct the operation of a processor. Logic may be formed from instruction signals stored in a memory (e.g., a non-transitory memory). Software is one example of logic. In another aspect, logic may include hardware, alone or in combination with software. For instance, logic may include digital and/or analog hardware circuits, such as hardware circuits including logical gates (e.g., AND, OR, XOR, NAND, NOR, and other logical operations). Furthermore, logic may be programmed and/or include aspects of various devices and is not limited to a single device.

A network typically includes a plurality of elements that host logic. In packet-based wide-area networks (WAN), servers (e.g., devices including logic) may be placed at different points on the network. Servers may communicate with other devices and/or databases. In another aspect, a server may provide access to a user account. The "user account" includes attributes for a particular user and commonly include a unique identifier (ID) associated with the user. The ID may be associated with a particular mobile device and/or blending device owned by the user. The user account may also include information such as relationships with other users, application usage, location, personal settings, and other information.

Embodiments may utilize substantially any wired or wireless network. For instance, embodiments may utilize various radio access network (RAN), e.g., Wi-Fi, global system for mobile communications, universal mobile telecommunications systems, worldwide interoperability for microwave access, enhanced general packet radio service, third generation partnership project long-term evolution (3G LTE), fourth generation long-term evolution (4G LTE), third generation partnership project (2G), BLUETOOTH^{®}, ultra mobile broadband, high speed packet access, x^{th} generation long-term evolution, or another IEEE 802.XX technology. Furthermore, embodiments may utilize wired communications.

It is noted that, terms "user equipment," "device," "user equipment device," "client," and the like are utilized interchangeably in the subject application, unless context warrants particular distinction(s) among the terms. Such terms may refer to a network component(s) or appliance(s) that sends or receives data, voice, video, sound, or substantially any data-stream or signaling-stream to or from network components and/or other devices. By way of example, a user equipment device may include an electronic device capable of wirelessly sending and receiving data. A user equipment device may have a processor, a memory, a transceiver, an input, and an output. Examples of such devices include cellular telephones (e.g., smart phones), personal digital assistants (PDAs), portable computers, tablet computers (tablets), hand-held gaming counsels, wearables (e.g., smart watches), desktop computers, etc.

It is noted that user equipment devices can communicate with each other and with other elements via a network, for instance, a wireless network, or a wireline network. A "network" can include broadband wide-area networks such as cellular networks, local-area networks, wireless local-area networks (e.g., Wi-Fi), and personal area networks, such as near-field communication networks including BLUETOOTH^{®}. Communication across a network may include packet-based communications, radio and frequency/amplitude modulations networks, and the like. Communication may be enabled by hardware elements called "transceivers." Transceivers may be configured for specific networks, and a user equipment device may have any number of transceivers configured for various networks. For instance, a smart phone may include a cellular transceiver, a Wi-Fi transceiver, a BLUETOOTH^{®} transceiver, or may be hardwired. In those embodiments in which it is hardwired, any appropriate kind or type of networking cables may be utilized. For example, USB cables, dedicated wires, coaxial cables, optical fiber cables, twisted pair cables, Ethernet, HDMI, and the like.

It is noted that the various embodiments described herein may include other components and/or functionality. It is further noted that while various embodiments refer to a blender or a blender system, various other systems may be utilized in view of embodiments described herein. For example, embodiments may be utilized in food processor systems, mixing systems, hand-held blending systems, various other food preparation systems, and the like. As such, references to a blender, blender system, and the like, are understood to include food processor systems, and other mixing systems.

Such systems generally include a blender base that may include a motor, a control system, a display, a memory and a processor. Further, such systems may include a blending container and a blade assembly. The blade assembly, the blending container, and the blender base may removably or irremovably attach to one another. The blending container may be powered in any appropriate manner, such as disclosed in U.S. Patent No. 10,638,886, entitled Powered Blending Container, which is hereby incorporated by reference. Foodstuff or other items may be added to the blender container. Furthermore, while blending of "ingredients," "contents" or "foodstuffs" is described by various embodiments, it is noted that non-food stuff may be mixed or blended, such as paints, epoxies, construction material (e.g., mortar, cement, etc.), and the like. Further, the blending systems may include any household blender and/or any type of commercial blending system, including those with covers that may encapsulate or partially encapsulate the blender. Further, commercial blending systems may include an overall blending system, such as a modular blending system that may include the blender along with other components, such as a cleaner, foodstuff storage device (including a refrigerator), an ice maker and/or dispenser, a foodstuff dispenser (a liquid or powder flavoring dispenser) or any other combination of such.

As used herein, the phrases "blending process," "blending program," and the like are used interchangeably unless context suggest otherwise or warrants a particular distinction among such terms. A blending process may include a series or sequence of blender settings and operations to be carried out by the blending device. In an aspect, a blending process may include at least one motor speed and at least one time interval for the given motor speed. For example, a blending process may include a series of blender motor speeds to operate the blender blade at the given speed, a series of time intervals corresponding to the given motor speeds, and other blender parameters and timing settings. The blending process may further include a ramp-up speed that defines the amount of time the motor takes to reach its predetermined motor speed. The blending process may be stored on a memory and recalled by or communicated to the blending device (e.g., in response to receiving a user input or the like).

In addition, blending of foodstuff or ingredients may result in a blended product. Such blended products may include drinks, frozen drinks, smoothies, shakes, soups, purees, sorbets, butter (e.g., nut butter), dips or the likes. It is noted that various other blended products may result from blending ingredients. Accordingly, terms such as "blended product" or "drink" may be used interchangeably unless context suggests otherwise or warrants a particular distinction among such terms. Further, such terms are not intended to limit possible blended products and should be viewed as examples of possible blended products.

Described herein are systems and methods for quiet blenders and, more particularly, to a blender system that may perform a quiet blending mode that can be initiated based on a triggering event. The triggering event can be a user selection, recipe selection, or captured audio content. The disclosed quiet blending systems and methods may utilize an adapter that may work with existing blenders, or may be provided as a part of or integrated with a blender.

The disclosed quiet blending systems and methods may include a blender or components thereof for use in a blending system that measure noise levels produced during operation of a motor (e.g., such as by blending food within a container, etc.), and in response to determining that the measured noise level is above a threshold, alters a motor speed until the noise level is below the threshold. The disclosed quiet blending systems and methods may include altering an operating duration of a motor when a lower speed is utilized.

In an embodiment, the disclosed quiet blending systems and methods may include hardware to provide quiet blending and quiet blending modes in a blender or blending system. In an embodiment, a user may interact with an interface (e.g., press a button, issue a voice command, etc.) to activate "Quiet Mode." In an embodiment, a blender or blending system may include a microphone that operatively measures sound when the blender is in use. In an embodiment, the microphone can be built onto the PCB of the control system of the machine or a standalone microphone that is wired to the control system. In an embodiment, a blender or blending system may include an accelerometer that operatively measures vibration. Additionally or alternatively, the blender or blending system may map the vibration. In an embodiment, when Quiet Mode is engaged, the system or component thereof may actively measure and monitor the sound level that is occurring during a blend (program or manual). In an embodiment, if the sound level exceeds a predetermined level, the system or component thereof may reduce the power to the motor. In an embodiment, blender or blending system may include a feedback loop to continually monitor measured sound and alter motor settings. In an embodiment, as the sound level decreases, the system or component thereof may increase the power to the motor. In an embodiment, the system or component thereof may increase the power to the motor until it reaches a threshold level, such as a level set by the user. In an embodiment, if a program is selected by the user, the system or component thereof can extend the time of the program as a function of the length of time of reduced power, percent reduction in power that was adjusted during the program, or the like.

This and related embodiments may be referred to as an active embodiment or mode including a monitoring or capture element for sound.

In an embodiment, the disclosed quiet blending systems and methods may include a program or software to provide quiet blending and quiet blending modes in a blender or blending system. In an embodiment, a user may activate Quiet Mode.

In an embodiment, for machines that have standard programs, a second set of programs may be stored in memory. The second set of programs are different from a first set of programs as the second set of programs are comparatively configured to run quieter than the first set or standard program. In an embodiment, when the Quiet Mode is engaged by the user, the second set of programs, e.g., the "Quiet" programs, may be run by the control system. In an embodiment, this may occur when a program button is pressed/started. In an embodiment, a Quiet program may run longer than a standard program, if the motor speed has been reduced. For example, a standard smoothie recipe may run at 100% speed for 45 seconds. A Quiet smoothie recipe may run at 65% speed, but run for 60 seconds to get the same or similar finished blended results (texture, smoothness, taste, etc.). It is noted that the first set of programs may include a number of different programs (e.g., 1, 2, 3 etc.) and the second set of programs may include the same or a different number of programs. In some examples, the second set of programs may include one Quiet program for every one standard program.

In an embodiment, for manual controlled machines or manual speed use of a machine with programs, a modification to speed control algorithm can be stored in memory of a control system. For example, a user may turn on Quiet Mode and then turn on the machine at 100% speed. In an embodiment, the control system may employ a specialized map or transfer function that adjusts motor speed. For example, when the speed is set to 100% by the user, the motor may actually be powered to 70%. In another example, when the speed is set to 90% by the user, the motor is may actually be set to 65%, etc. In some embodiments, the control system may recognize a pattern, such as a user increasing motor speed at or about a predetermined rate. The control system may alter the motor speed to follow a rate of increase or "ramp" up to a predetermined speed. In an embodiment, the altering of speeds in manual run mode may result in lower sound levels when blending as compared to full speed/standard mode.

This and related embodiments may be referred to as a pre-programmed embodiment or mode including pre-programmed blending programs that reduce sound or noise of blending.

In an embodiment, the disclosed quiet blending systems and methods may include a program or software to provide quiet blending and quiet blending modes in a blender or blending system. In an embodiment, a user may activate "Quiet Mode."

In an embodiment, a default mode could be set to "Quiet" and then the full power configuration could be named, "Turbo mode" or "High Power mode." In an embodiment, the machine could always be in Quiet mode and the user would have to purposely select another mode to change it to a full speed setting, which may be louder.

Aspects of systems, apparatuses or processes described herein generally relate to a sound recognition and/or reduced sound systems and methods for a blender. In an embodiment, the systems and methods may provide quiet blenders or quiet blending modes that can be initiated based on user selection, recipe selection, or captured audio content.

The systems and methods may include a capture component that may capture or otherwise receive an audio signal. For instance, the capture component may include and/or communicate with a microphone that may receive an audio signal. In another aspect, the systems and methods may include an analysis component that may analyze captured audio and may determine an aspect of the captured audio (e.g., decibels, loudness, etc.). The analysis component may identify or represent interest points. The analysis component may compare the captured audio to a threshold parameter (e.g., desired decibels, loudness, etc.). The comparison may determine if the sound of the system should be reduced (e.g., the captured audio is greater than the threshold parameter) and by how much (e.g., two-fold, 20% etc. to be under the threshold parameter). In some examples, the capture component and analysis component may iterated measuring sound and reducing speed until measured sound is below a threshold parameter. The library component may store recipes and quiet programs, and may save user preferences based on past user input.

In an example, a user may operate a blending system to blend foodstuff. During a blending process, a blending device may emit sound and/or vibration. A device, such as a user device or a blender, may capture the sound and/or vibration. A user may input operating parameters that define or describe the blending system, ingredients, a user's observations of a blending process, and/or a blending process. For instance, the user may identify a make/model of blending device, ingredients added, blending process selected, blender settings, or the like, as well as whether a quiet mode is desired.

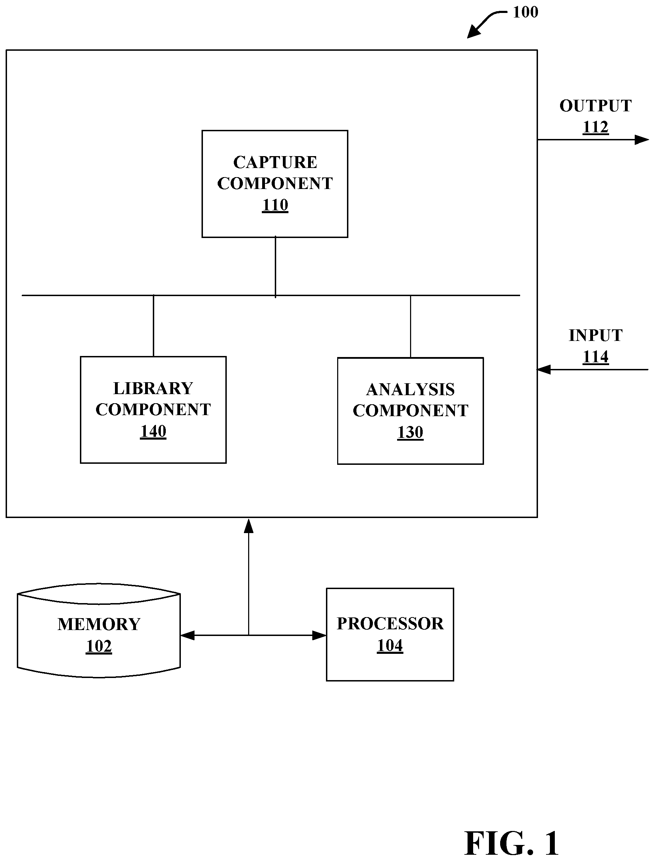

Referring now to FIG. 1, depicted is a block diagram of an illustrative system 100 that may provide quiet or reduced sound blending. The system 100 includes a memory 102 and processor 104. The memory 102 may be configured to store computer executable components such as capture component 110, analysis component 130, and library component 140. The processor 104 may facilitate operation of the computer executable components. It is noted that the system 100 may include one or more devices, such as a user device and/or a blending device. It is further noted that one or more devices may include, at least in part, the various components. For instance, a single component of the system 100 may be comprised by one or more devices (e.g., an end-user device, a technician device, etc.). While shown as separate or distinct components, the components of the system 100 may be comprised by one or more components.

The capture component 110 may generally be any device configured to monitor and capture audio signals. In at least one embodiment, the capture component 110 may include a microphone, such as a microphone of a user device (e.g., a MEMS microphone) or a microphone may be positioned in, on, or near a blender base, blender container, or blender. In an embodiment, the microphone may be built onto a PCB control system of machine blender device. The microphone may measure sound as the blender is being used. In at least one embodiment, the capture component 110 may include an accelerometer, such as an accelerometer of a user device or an accelerometer may be positioned in, on, or near a blender base, blender container, or other portions of the system 100. The accelerometer may measure vibration as the blender is being used. It is noted that the capture component 110 may be both an integrated component of the blender or blending system (or an adaptable component that can be used to modify existing blenders or blending systems) or a user device such as a smart phone or smart watch.

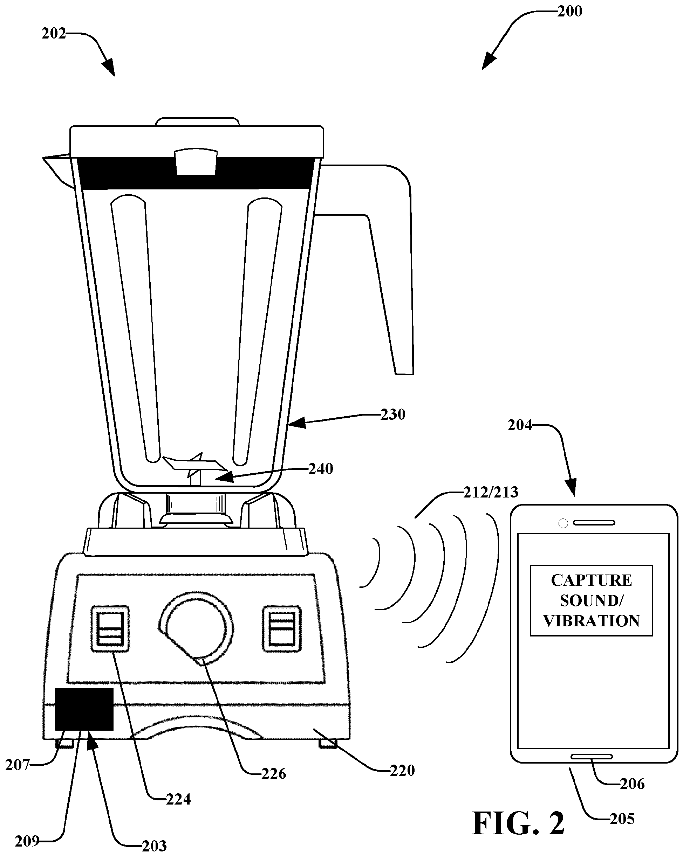

Turning now to FIG. 2 with reference to FIG. 1, depicted is a blending system 200 that includes a blending device 202 and one or both of a user device 204 or an integrated capture component 203. It is noted that various components of the system 100 may be comprised by the blending device 202 and/or the user device 204 or the integrated capture component 203. In an example, the capture component 110 may include a user device microphone 206 of the user device 204. In another example, an integrated microphone 207 may be provided as part of the integrated capture component 203. It is noted that a mobile device accelerometer 205 and/or an integrated accelerometer 209 may be provided instead or in addition to the user device microphone 206 or the integrated microphone 207. The user device microphone 206 and/or the integrated microphone 207 may receive and process the audio signals 212 as an input 114 from the blending device 202 (e.g., via an airway or other carrier of a sound wave). The user device microphone 206 and/or the integrated microphone 207 may include and/or be coupled to a transducer (not depicted) that transduces the received audio signals into representative electronic signals. It is noted that capture component 110 may utilize a plurality of microphones to improve reception and/or filter noise. The mobile device accelerometer 205 and/or the integrated accelerometer 209 may receive and process a vibration 213 as an input 114 from the blending device 202 (e.g., via an airway or other carrier of vibration). The mobile device accelerometer 205 and/or the integrated accelerometer 209 may include and/or be coupled to a transducer (not shown) that transduces the received vibration into representative electronic signals. It is noted that the capture component 110 may utilize a plurality of accelerometers to improve reception and/or filter vibration.

The blending device 202 may generate noise and/or vibration as a result of operation of a motor (not shown), agitation of food stuff, etc. The motor may be housed within a blender base 220. The blender base 220 may operatively engage with a blending container 230 and/or a blade assembly 240 (e.g., may interlock with the blending container 230 to maintain a positioning of the blending container 230 during operation, and/or may interlock with the blade assembly 240 to drive the blade assembly 240 during operation). A user may interact with one or more input devices (e.g., a knob 226, a switch 224, etc.) to provide input to operate the motor. The motor may be operatively engaged with the blade assembly 240, which may be disposed within the blending container 230. Operation of the motor may cause rotation of the blade assembly 240. In an example, a user may add ingredients to the blending container 230, and the blade assembly 240 may chop, blend, or otherwise process the ingredients. Operation of the blending device 202 may generally produce noise (e.g., audio signals 212) and/or vibration (e.g., vibration 213) which may be captured by user device microphone 206 and/or the mobile device accelerometer 205.

In an aspect, the capture component 110 may include a transducer that may convert captured audio signals and/or vibration to an electrical representation thereof. An analysis component 130 may be included and used generate a fingerprint, spectrogram, or other representation of the received electronic signal. The fingerprint may be used by the analysis component 130 to compare the captured information to threshold parameters. According to at least one embodiment, an entire spectrogram of audio/vibration captured from a blending process may include large amounts of data and may be difficult to process, such as for comparing spectrograms with each other. Thus, an analysis component 130 may generate compact descriptors ("fingerprints") of captured audio/vibration. In an example, an analysis component 130 may generate a fingerprint that represents or identifies the captured audio/vibration signal.

In an aspect, the fingerprint may include or describe information over a period of time, such as amplitude and/or intensity of a frequency at various times. It is noted that filters may be utilized to filter-out or remove certain frequencies from an audio/vibration signal. For instance, band-pass filters, or other filters may remove some sound generated by a motor (e.g., normal operating sounds), remove background noise (e.g., a user speaking), isolate frequencies (e.g., those most likely to help identify an issue), or the like.

In another aspect, the fingerprint may include a combination of frequency measurements over time. It is noted that various processes may be utilized to generate a fingerprint such as processes employing Fourier transforms, wavelet transforms, interest point recognition, or the like. Identifying or calculating an interest point may include identifying unique characteristics of fingerprints and/or audio signals. For instance, calculating fingerprints may include calculating interest points that identify unique characteristics of a time-frequency representation of captured audio/vibration. Fingerprints may then be generated as functions of sets of interest points. Interest points may include a spectral peak of a frequency over a period of time, timing of the onset of a frequency, or any suitable event over a duration of time.

Analysis component 130 may utilize a generated fingerprint (or other representations of audio/vibration signals) and may compare the audio/vibration signals to threshold parameter. The threshold parameter, for example, may be a certain level of sound or vibration (e.g., decibels) that is considered a maximum sound or vibration. The threshold parameter may vary based on the step of the blending process, ingredients, recipe, etc. or may be inputted by a user as a customized level. The analysis component 130 may analyze captured audio/vibration from the capture component 110 and may determine an aspect of the captured audio/vibration (e.g., decibels, loudness, etc.). The analysis component 130 may identify or represent interest points. The analysis component may compare the captured audio to a threshold parameter (e.g., desired decibels, loudness, etc.). The comparison may determine if the sound of the system should be reduced (e.g., the captured audio is greater than the threshold parameter) and by how much (e.g., two-fold, 20% etc. to be under the threshold parameter). The library component 140 may store recipes and quiet programs, and may save user preferences based on past user input. In some examples, the analysis component 130 may utilize a step down function that steps down power/speed of the motor, then instructs the capture component 110 to iterate capturing of audio. The analysis component 130 may continue to step down the power/speed of the motor until the capture component 110 captures audio below a threshold level. It is noted that the analysis component 130 may identify a minimum power/speed for the motor. If this minimum is reached, the analysis component 130 may terminate the step down function. According to at least some embodiments, the analysis component 130 may store power/speed of the motor at which further step down was terminated. This stored power/speed may be used as a first speed/power at which to step down in future blending programs. It is noted that the analysis component 130 may use historic information, such as an average power/speed at which a target volume was reached for the ten most recent blends, and may base a first step down power/speed as a function thereof.

In an example, the user may place the user device 204 next to or near the blending device 202. The user may initiate a listening or monitoring process by providing input to the user device or blender (e.g., selecting "capture sound," "quiet mode," etc.). The user may additionally initiate a blending process, such as by pressing a switch 224 and/or a knob 226. The blending process and/or listening process may continue for a predetermined amount of time or a dynamically amount of time (e.g., user determined, when blending process ends, etc.). As the blending process continues, the capture component 110 may measure noise/vibration levels produced by blending food within a container. The analysis component 130 may evaluate the captured data and determine whether the measured noise/vibration level is above or within a threshold parameter. If the measured noise/vibration level is above the threshold parameter, the analysis component 130 may communicate to the system to alter a motor speed until the noise/vibration level is below the threshold parameter as confirmed by the capture component 110 and the analysis component 130. The threshold parameter may be a function of user input, a stored threshold, a learned threshold, ambient noise, etc. In examples, the threshold parameter may be stored in the library component 140.

In accordance with various aspects of the subject specification, an example embodiment may employ classifiers that are explicitly trained (e.g., via a generic training data) as well as implicitly trained (e.g., via manual input, blending information, user preferences, historical information, receiving extrinsic information). For example, support vector machines may be configured via learning or training phase within a classifier constructor and feature selection module. Thus, the classifier(s) may be used to automatically learn and perform a number of functions, including but not limited to determining preferred sound/vibration level, maximum sound/vibration level, anticipated sound/vibration levels based on recipes and foods, and the like. This learning may be on an individual basis (e.g., based solely on a single user, blender, blender make/model, blending process) or may apply across a set of or the entirety of a base (e.g., a user base). Information from the users may be aggregated, and the classifier(s) may be used to automatically learn and perform a number of functions based on this aggregated information. The information may be dynamically distributed, such as through an automatic update, a notification, or any other method or means, to the entire user base, a subset thereof or to an individual user.

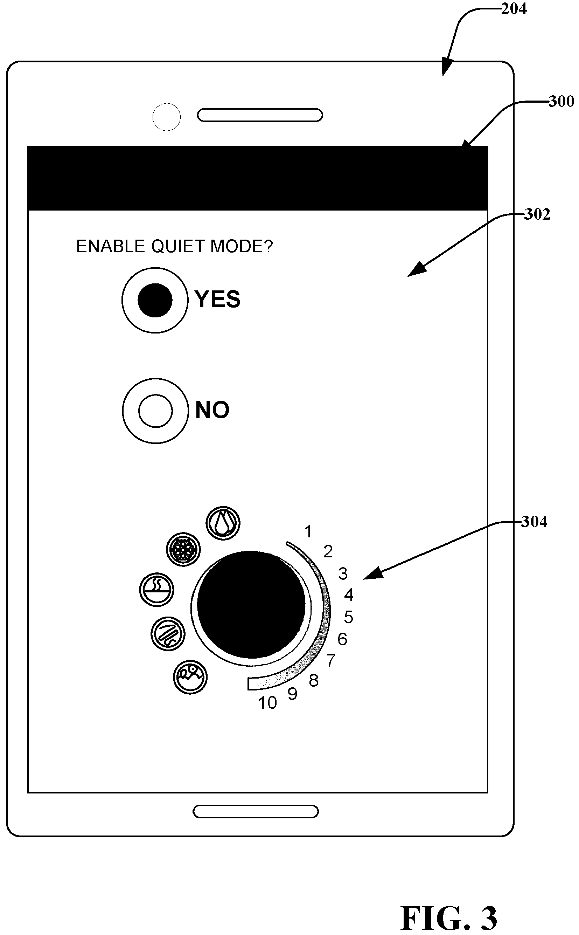

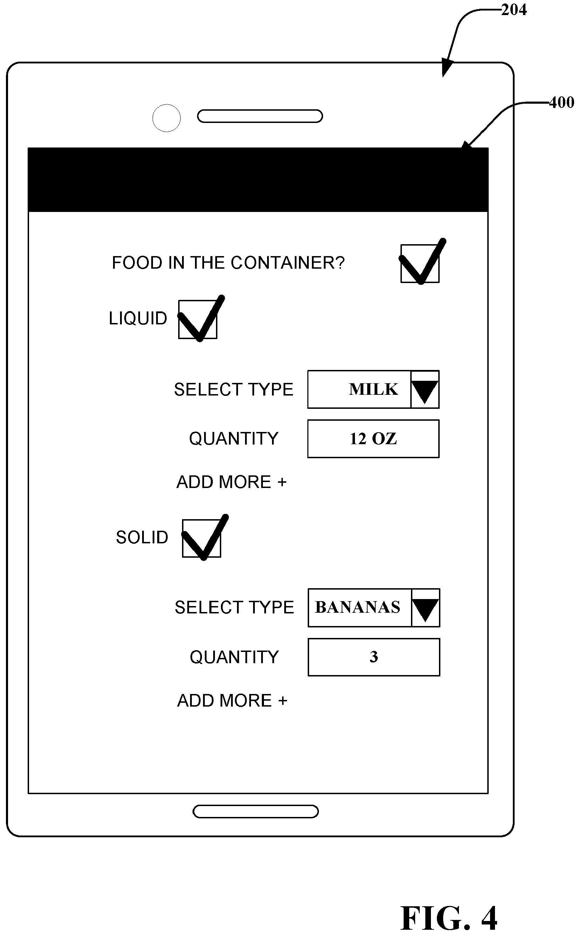

In an example, a user may provide operating parameters and/or blending device parameters as user input (e.g., input 114). The user may interact with an interface of the user device 204. Illustrative examples of user interfaces are depicted in FIGS. 3-4. Turning to FIGS. 3-4, in at least one embodiment, an interface 300 may be configured to prompt a user and/or receive input from the user. The interface may provide controls 302 to receive an input pertaining to when quiet mode is activated, such as radio buttons as shown in FIG. 3, a drop-down box, or the like. The blending process or operating parameters may be set via user controls. According to an aspect, interface may include a graphical representation 304 of a blender input device, such as graphical knob. A user may rotate the graphical knob to select a blending process for which quiet mode is to be activated. This may allow the user to easily input blending parameters. In an example, the graphical knob may be rotated via a touch screen or other input mechanism. As depicted in FIG. 4 for example, an interface 400 may prompt a user to provide input associated with ingredients in the blending container 230. Prior to capturing audio, the user may select the ingredients that are input into the blending container 230 and/or quantities of the ingredients via desired user controls. It is noted that the types and/or quantities of the ingredients may be any appropriate type or quantity. It should be understood that while FIGS. 3-4 depict interfaces 300, 400 on the user device 204, such interfaces 300, 400 may also be present elsewhere, such as, for example, on the blending device 202 (FIG. 2).

Referring again to FIG. 2, while a motor and/or blade assembly 240 is operating, a user may add additional ingredients, change blending speeds, pulse the motor, or the like. This may result in changes to audio signals generated by the blending device 202. That is, the audio signals that are captured may be indicative of additional ingredients, a change in blending speed, a pulse of the motor or the like. For example, the addition of ingredients may cause the general characteristic of the interior of the blending container 230 to change, which in turn changes the type of sound that emanates from the blending container. In another example, if a user changes the blend speed, the pitch of the sound emanating from the motor may change as a result, thereby changing the audio signals that are detected. In at least one embodiment, a user may provide system 100 with a recipe that the user is following. This may allow analysis component 130 to associate variations in a fingerprint with user acts. Accordingly, the variations may be accounted for and/or compared to expected variations. According to at least one embodiment, system 100 may track or monitor user actions as a blending process is performed.

It is further noted that blender base 220 may communicate with user device 204 via wireless and/or wired interfaces. For instance, blender base 220 and user device 204 may communicate via a wireless protocol (e.g., Wi-Fi, BLUETOOTH, NFC, etc.). The blender base 220 may transmit operating parameters to the user device 204. The operating parameters may include but are not limited to: a make/model of the blending device, sensor information (e.g., temperature, weight, vibration, etc.), information describing whether the blending device 202 is interlocked, information associated with a selected blending process, a motor speed setting, user input (e.g., user selections), or the like. It is noted that a blending system 200 may automatically determine and/or detect ingredients added to the blending container 230, quantities added, or the like. The user device 204 may be used to communicate threshold parameters, e.g., those inputted by the user, to the blending device, and may be used to communicate to the blending device that the user has initiated a quiet mode or blending.

The system 100 may utilize various techniques to identify issues based on captured audio and/or operating parameters. What has been described above are exemplary embodiments that may facilitate providing quiet or reduced sound blending processes and devices. In view of the subject matter described herein, methods that may be related to various embodiments may be better appreciated with reference to the flowchart of FIGS. 3-4. While the method is shown and described as a series of blocks, it is noted that associated methods or processes are not limited by the order of the blocks. It is further noted that some blocks and corresponding actions may occur in different orders or concurrently with other blocks. In addition, different blocks or actions may be utilized to implement the method described hereinafter. Various actions may be completed by one or more of users, mechanical machines, automated assembly machines (e.g., including one or more processors or computing devices), or the like.

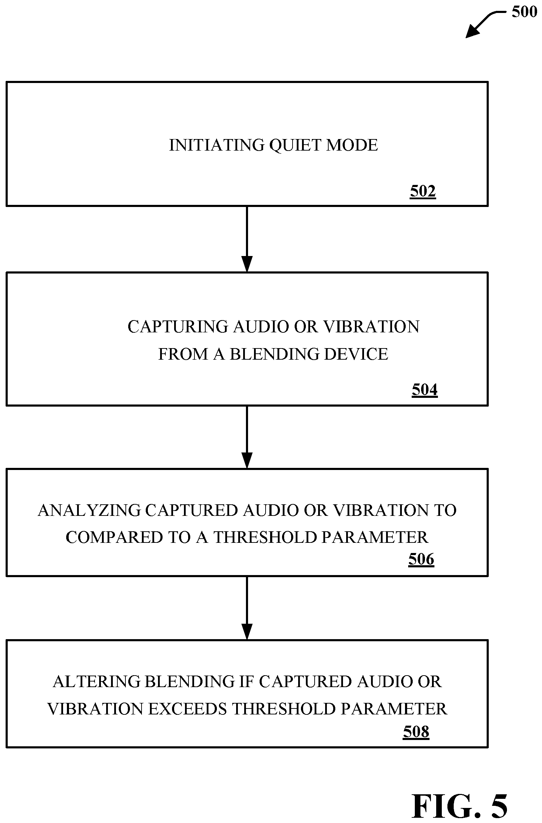

FIGS. 5-6 depicts flowcharts of non-limiting methods 500, 600 related to the described blending systems.

FIG. 5 relates to methods 500 for blending systems that include a capture component (e.g., 110) to provide quiet blending and quiet blending modes in a blender or blending system. In an embodiment, a user may press a button to activate "Quiet Mode" at block 502. That is, the various systems described herein may receive, via an interface or the like, an input to initiate a quiet blending mode. In an embodiment, a microphone may be provided embedded in the blender base to measure sound when the blender is in use. In an embodiment, an accelerometer may be provided in the blender or blending system to measure or map vibration. In an embodiment, the capture component 110 can be built onto the PCB of the control system of the machine or the capture component 110 may be standalone that is wired to the control system.

In an embodiment, when Quiet Mode is engaged, the system or component thereof (e.g., capture component 110) may actively measure and monitor the sound/vibration level that is occurring during a blend (program or manual) at block 504. In an embodiment, the system or component thereof (e.g., analysis component 130) may analyze the sound/vibration level during the blending process at block 506 to compare the captured data to a threshold parameter. If the sound/vibration level exceeds a predetermined level or threshold parameter, the system or component thereof may reduce the power to the motor at block 508. In an embodiment, a feedback loop may be added or used to continuously monitor the sound/vibration and reduce the power. In an embodiment, as the sound level decreases, the power to the motor can be increased. In an embodiment, the power can be increased until it reaches the threshold parameter (e.g. a level set by the user or stored in the system). In an embodiment, if a program is selected by the user, the control system can extend the time of the program depending on the length of time of reduced power or percent reduction in power that was adjusted during the program.

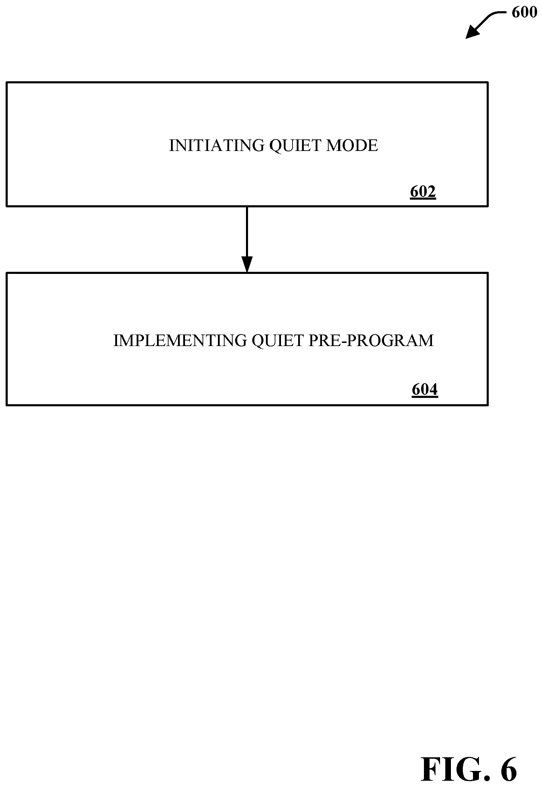

FIG. 6 relates to methods 600 for blending systems that include a program or software to provide quiet blending and quiet blending modes in a blender or blending system. In an embodiment, a user may activate "Quiet Mode" at block 602.

In an embodiment, for machines that have standard programs, a second set of programs may be loaded into the control system that are adjusted to run quieter than the standard program. In an embodiment, when the Quiet Mode is engaged by the user at block 602, the "Quiet" programs may be run by the control system at block 604. In an embodiment, this may occur when a program button is pressed/started. In an embodiment, a "Quiet" program may need to run longer than a standard program, if the motor speed has been reduced. For example, a standard smoothie recipe may run at 100% speed for 45 seconds. A Quiet smoothie recipe may run at 65% speed, but run for 60 seconds to get the same finished blended results (texture, smoothness, taste, etc.).

In an embodiment, for manual controlled machines or manual speed use of a machine with programs, a modification to speed control algorithm can be stored in the control system. For example, a user may turn on Quiet Mode at block 602 and then turn on the machine at 100% speed. In an embodiment, the control system may have a map that adjusts speed when running at block 604. For example, when the speed is set to 100% by the user, the motor may actually be powered to 70%. For example, when the speed is set to 90% by the user, the motor is may actually be set to 65%, etc. In an embodiment, the mapping of speeds in manual run mode may result in lower sound levels when blending as compared to full speed/standard mode.

This and related embodiments may be referred to as a pre-programmed embodiment or mode including pre-programmed blending programs that reduce sound or noise of blending.

In an embodiment, the disclosed quiet blending systems and methods may include a program or software to provide quiet blending and quiet blending modes in a blender or blending system. In an embodiment, a user may activate "Quiet Mode."

In an embodiment, a default mode could be set to "Quiet" and then the full power configuration could be named, "Turbo mode" or "High Power mode." In an embodiment, the machine could always be in Quiet mode and the user would have to purposely select another mode to change it to a full speed setting, which may be louder.

In the described embodiments, the blending systems may include one or more (or all of the following): an extra button for quiet mode that may light up and stays on; an integrated capture component, a user device related capture component, an external capture component that may use a hardwire connection such as a USB plug or communication network to capture data; a learning AI that relates to the user and user habits to determine threshold parameters of sound; a sound/vibration reduction that lessens the peaks of the sound/vibration, but not the troughs/average, or a sound/vibration reduction that also lessens the troughs/average; smart recipe-based or ingredient-based reduced sound programs where ingredients could amplify or dampen sound (e.g., ice), and the like. In an embodiment, the capture element may be near an air vent so as not to require additional holes.

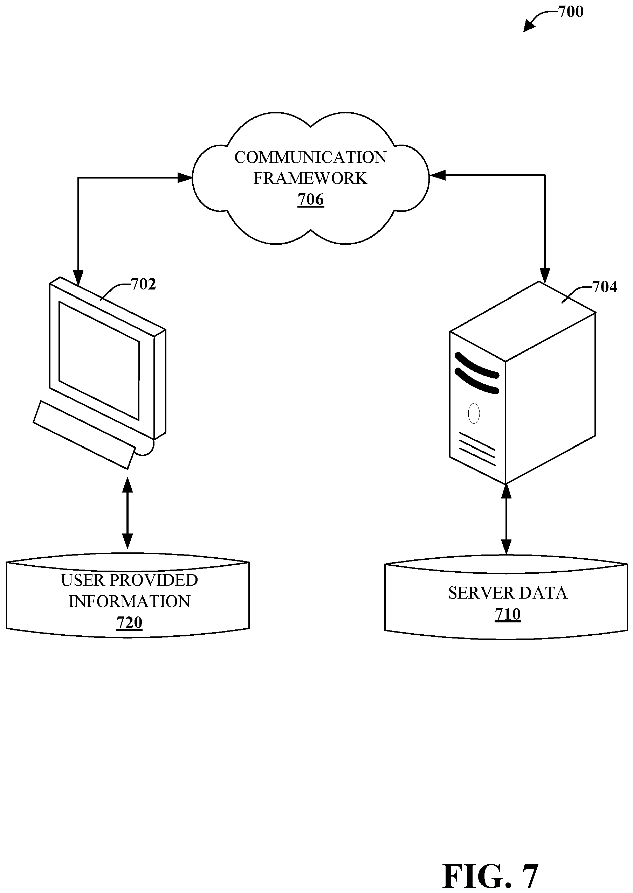

What has been described above may be further understood with reference to the following figures. FIGS. 7-8 provide exemplary operating environments or systems capable of implementing one or more systems, apparatuses, or processes described above. FIGS. 7-8 are not intended to limit the scope of such systems, apparatuses, or processes. By way of example, computing environment 700 may refer to one or more embodiment of the various embodiments described with reference to the above figures. However, variations to computing environment 700 may be obvious to achieve aspects or processes described herein.

FIG. 7 is a schematic diagram of a computing environment 700 in accordance with various disclosed aspects. It is noted that the computing environment 700 may include various other components or aspects. As depicted, the computing environment 700 may include one or more client(s) 702, one or more server(s) 704, one or more client data store(s) 720, one or more server data store(s) 710, and a communication framework 706.

While depicted as a desktop computer(s), client(s) 702 may include various other devices that may include hardware and/or software (e.g., program threads, processes, computer processors, non-transitory memory devices, etc.). In an example, client(s) 702 may include laptop computers, smart phones, tablet computers, blending devices, wearables, etc.). The client(s) 702 may include or employ various aspects disclosed herein. For example, client(s) 702 may include or employ all or part of various systems (100, 200, etc.) and processes (e.g., method 600, etc.) disclosed herein.

Likewise, server(s) 704 may include various devices that may include hardware and/or software (e.g., program threads, processes, computer processors, non-transitory memory devices, etc.). Server(s) 704 may include or employ various aspects disclosed herein. For example, server(s) 704 may include or employ all or part of various systems (100, 200, etc.) and processes (e.g., method 500, 600, etc.) disclosed herein. It is noted that server(s) 704 and client(s) 702 may communicate via communication framework 706. In an exemplary communication, client(s) 702 and server(s) 704 may utilize packeted data (e.g., data packets) adapted to be transmitted between two or more computers. For instance, data packets may include coded information associated with blending processes, sound/vibration information, or the like.

Communication framework 706 may include various network devices (e.g., access points, routers, base stations, etc.) that may facilitate communication between client(s) 702 and server(s) 704. It is noted various forms of communications may be utilized, such as wired (e.g., optical fiber, twisted copper wire, etc.) and/or wireless (e.g., cellular, Wi-Fi, near-field communication, etc.) communications.

In various embodiments, client(s) 702 and server(s) 704 may respectively include or communicate with one or more client data store(s) 720 or one or more server data store(s) 710. The data stores may store data local to client(s) 702 or server(s) 704.

In at least one embodiment, a client of client(s) 702 may transfer data describing a fingerprint, user account data, sound/vibration levels, or the like to a server of server(s) 704. The server may store the data and/or employ processes to alter the data. For example, the server may transmit the data to other clients of client(s) 702.

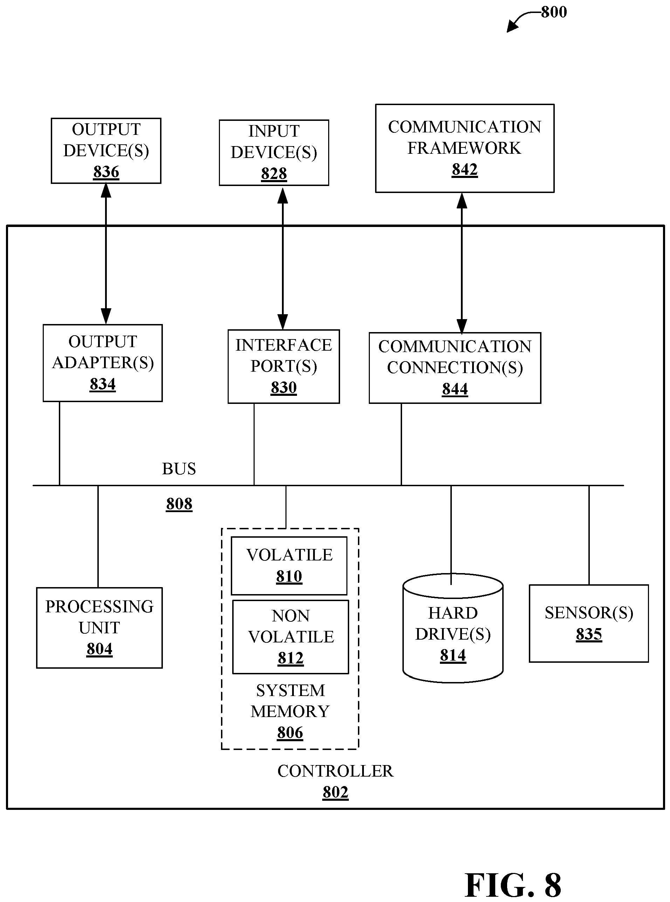

FIG. 8 is a block diagram of an illustrative computer system 800 that may be employed to execute various disclosed embodiments. It is noted that various components may be implemented in combination with computer executable instructions, hardware devices, and/or combinations of hardware and software devices that may be performed by computer system 800.

Computer system 800 may include various components, hardware devices, software, software in execution, and the like. In embodiments, the computer system 800 may include a controller 802. The controller 802 may include a system bus 808 that couples various system components. Such components may include a processing unit(s) 804, system memory device(s) 806, disk storage device(s) 814, sensor(s) 835, output adapter(s) 834, interface port(s) 830, and communication connection(s) 844. One or more of the various components may be employed to perform aspects or embodiments disclosed herein. It is noted that one or more components of FIG. 8 may be comprised in different or other devices. For instance, the sensors(s) 835 may be disposed in a blender base or a user device. In an example, a blender base may include one or more of a temperature sensor, vibration sensor, or the like. The temperature sensor may sense parameters of the blender base, such as a temperature of a motor or temperature of other components. The blender base may communicate the sensed parameters to a user device (e.g., as input 114) and the user device may utilize the received input to determine whether the sound/vibration level exceeds a threshold parameter and whether the motor of the blender, for example, should be reduced to provide reduced sound/vibration.

In an aspect, the computer system 800 may "learn," such as described above user preferences based upon modifications of recipes by users, through rating of recipes both positively and negatively. For example, the computer system 800 may modify a particular blending process as the majority of users or supermajority thereof have disapproved of the blending process or the like. The computer system 800 may dynamically push out the revised recipe or receive the revised recipe as applicable.

Processing unit(s) 804 may include various hardware processing devices, such as single core or multi-core processing devices. In addition, processing unit(s) 804 may refer to a "processor," "controller," "control system," "computing processing unit (CPU)," or the likes. Such terms generally relate to a hardware device. Additionally, processing unit(s) 804 may include an integrated circuit, an application specific integrated circuit (ASIC), a digital signal processor (DSP), a field programmable gate array (FPGA), a programmable logic controller or control system (PLC), a complex programmable logic device (CPLD), a discrete gate or transistor logic, discrete hardware components, or the like.

System memory 806 may include one or more types of memory, such volatile memory 810 (e.g., random access memory (RAM)) and non-volatile memory 812 (e.g., read-only memory (ROM)). ROM may include erasable programmable ROM (EPROM), electrically erasable programmable ROM (EEPROM). In various embodiments, processing unit(s) 804 may execute computer executable instructions stored in system memory 806, such as operating system instructions and the like.

The controller 802 may also be one or more hard drive(s) 814 (e.g., EIDE, SATA). While hard drive(s) 814 are depicted as internal to the controller 802, it is noted that hard drive(s) 814 may be external and/or coupled to the controller 802 via remote connections. In addition, input port(s) 830 may include interfaces for coupling to input device(s) 828, such as disk drives. Disk drives may include components configured to receive, read and/or write to various types of memory devices, such as magnetic disks, optical disks (e.g., compact disks and/or other optical media), flash memory, zip drives, magnetic tapes, and the like.

It is noted that hard drive(s) 814 and/or other disk drives (or non-transitory memory devices in general) may store data and/or computer-executable instructions according to various described embodiments. Such memory devices may also include computer-executable instructions associated with various other programs or modules. For instance, hard drives(s) 814 may include operating system modules, application program modules, and the like. In addition, aspects disclosed herein are not limited to a particular operating system, such as a commercially available operating system.

Input device(s) 828 may also include various user interface devices or other input devices, such as sensors (e.g., microphones, pressure sensors, light sensors, temperature sensors, vibration sensors, etc.), scales, cameras, scanners, facsimile machines, and the like. A user interface device may generate instructions associated with user commands. Such instructions may be received by the controller 802. Examples of such interface devices include a keyboard, mouse (e.g., pointing device), joystick, remote controller, gaming controller, touch screen, stylus, and the like. Input port(s) 830 may provide connections for the input device(s) 828, such as via universal serial ports (USB ports), infrared (IR) sensors, serial ports, parallel ports, wireless connections, specialized ports, and the like. In an exemplary embodiment, the input device(s) 828 may be included in portions of a blending system. For example, sensors (e.g., temperature, vibration, weight, etc.) may be disposed in a blender base or a container. The controller 802 may receive input from the sensors and may determine whether the sound/vibration level exceeds a threshold parameter based at least in part on the received input. It is further noted that some input device(s) 828 may be included within a user device, such as a smart phone. As an example, a smart phone may include a microphone.

Output adapter(s) 834 may include various devices and/or programs that interface with output device(s) 836. Such output device(s) 836 may include LEDs, computer monitors, touch screens, televisions, projectors, audio devices, printing devices, or the likes.

In embodiments, the controller 802 may be utilized as a client and/or a server device. As such, the controller 802 may include communication connection(s) 844 for connecting to a communication framework 842. The communication connection(s) 844 may include devices or components capable of connecting to a network. For instance, communication connection(s) 844 may include cellular antennas, wireless antennas, wired connections, and the like. Such communication connection(s) 844 may connect to networks via communication framework 842. The networks may include wide area networks, local area networks, facility or enterprise wide networks (e.g., intranet), global networks (e.g., Internet), satellite networks, and the like. Some examples of wireless networks include Wi-Fi, Wi-Fi direct, BLUETOOTH^{™}, Zigbee, and other 802.XX wireless technologies. It is noted that communication framework 842 may include multiple networks connected together. For instance, a Wi-Fi network may be connected to a wired Ethernet network.

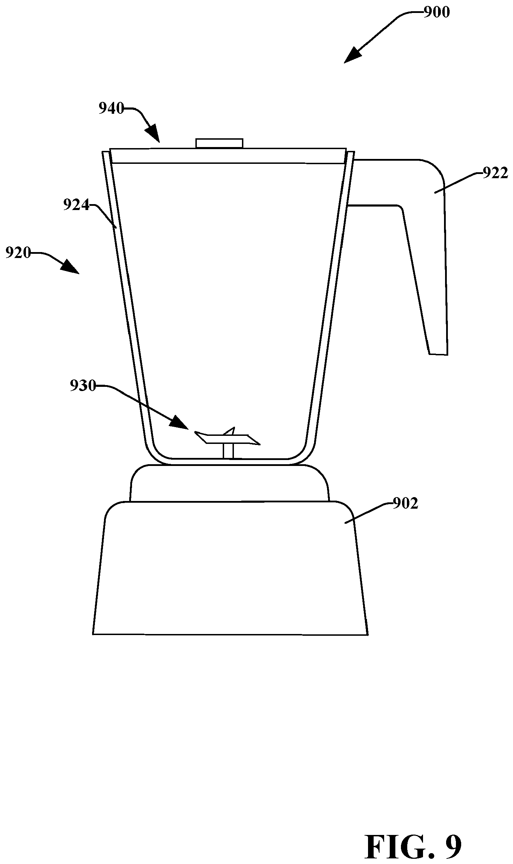

FIG. 9 illustrates an illustrative blending system 900 in accordance with various disclosed embodiments. The blending system 900 may utilize various disclosed aspects. For instance, the blending system 900 may include some or all portions of embodiments described with reference to FIGS. 1-8.

The blending system 900 includes a blender base 902, a container 920 operatively attachable to the blender base 902, a blade assembly 930, and a lid 940 that may be operatively attached to the container. The container 920 may include walls 924 and a handle 922. Foodstuff may be added to the container 920 for blending. It is noted that the container 920 may be formed of various materials such as plastics, glass, metals, or the like. In another aspect, the container 920 may be powered in any appropriate manner.

The blade assembly 930, the container 920, and the blender base 902 may removably or irremovably attach. The container 920 may be powered in any appropriate manner, such as disclosed in U.S. Patent No. 10,638,886, entitled "Powered Blending Container," which is hereby incorporated by reference in its entirety. While shown as a large-format system, the blending system 900 may include a single serving style system, where the container is filled, a blender base is attached to the container, and then the container is inverted and placed on a base.

The blender base 902 includes a motor disposed within a housing. The motor selectively drives the blade assembly 930 (e.g., cutting blades, chopping blades, whipping blades, spiralizing blades, etc.). The blade assembly 930 may agitate, impart heat, or otherwise interact with contents within the container. Operation of the blending system 900 may impart heat into the contents within container 920.

In at least one embodiment, the blending system 900 may identify or detect whether the blending system 900 is interlocked through mechanical detection (e.g., push rods), user input, image recognition, magnetic detection (e.g., reed switches), electronic detection (e.g., inductive coils, a near field communication (NFC) component), or the like.

The blending system 900 and processes described herein generally relate to blending or food-processing systems include a food-processing disc including one or more inductive coils. In another aspect, one or more of the disc and/or lid may include an NFC component that may interact with an NFC component of a blender base. The NFC component of the blender base may receive information regarding the type of the disc and may utilize the blender base may utilize the information to determine a blending process to be utilized by the system.

It is noted that the various embodiments described herein may include other components and/or functionality. It is further noted that while described embodiments refer to a blender or a blender system, various other systems may be utilized in view of the described embodiments. For example, embodiments may be utilized in food processor systems, mixing systems, hand-held blender systems, various other food preparation systems, and the like. As such, references to a blender, blender system, and the like, are understood to include food processor systems, and other mixing systems. Such systems generally include a blender base that may include a motor, a blade assembly, and a control system. Further, such systems may include a container, a display, a memory or a processor.

As used herein, the phrases "blending process," "blending program," and the like are used interchangeably unless context suggest otherwise or warrants a particular distinction among such terms. A blending process may include a series or sequence of blender settings and operations to be carried out by the blending system 900. In an aspect, a blending process may include at least one motor speed and at least one time interval for the given motor speed. For example, a blending process may include a series of blender motor speeds to operate the blender blade at the given speed, a series of time intervals corresponding to the given motor speeds, and other blender parameters and timing settings. The blending process may further include a ramp up speed that defines the amount of time the motor takes to reach its predetermined motor speed. The blending process may be stored on a memory and recalled by or communicated to the blending device.

The terms "component," "module," "system," "interface," "platform," "service," "framework," "connector," "control system," "controller," or the like are generally intended to refer to a computer-related entity. Such terms may refer to at least one of hardware, software, or software in execution. For example, a component may include a computer-process running on a processor, a processor, a device, a process, a computer thread, or the likes. In another aspect, such terms may include both an application running on a processor and a processor. In addition, such terms may be localized to one computer and/or may be distributed across multiple computers.

What has been described above includes examples of the present specification. It is, of course, not possible to describe every conceivable combination of components or methodologies for purposes of describing the present specification, but one of ordinary skill in the art may recognize that many further combinations and permutations of the present specification are possible. Each of the components described above may be combined or added together in any permutation to define the system 100. Accordingly, the present specification is intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

Further aspects are provided by the subject matter of the following clauses:

A method of instituting a quiet blending mode, the method comprising: capturing, via at least one sensor, one or more sound and/or vibration inputs from a blender; comparing the one or more sound and/or vibration inputs to a threshold parameter; and transmitting a command to a blender motor to reduce power when the one or more sound and/or vibration inputs exceed the threshold parameter.

The method according to any one of the previous clauses, further comprising: receiving, via an interface, an input to initiate the quiet blending mode; and engaging the quiet blending mode to capture the one or more sound and/or vibration inputs.

The method according to any one of the previous clauses, wherein the at least one sensor comprises a microphone.

The method according to any one of the previous clauses, wherein the at least one sensor comprises an accelerometer.

The method according to any one of the previous clauses, wherein the capturing, the comparing, and the transmitting are continuously completed to form a feedback loop.

The method according to any one of the previous clauses, further comprising transmitting a second command to the blender motor to increase power when the one or more sound and/or vibration inputs are below the threshold parameter.

The method according to any one of the previous clauses, wherein transmitting the command to the blender motor is in accordance with a blender program.

A system for instituting a quiet blending mode, the system comprising: a blender comprising a motor; a capture component comprising at least one sensor configured to capture one or more sound and/or vibration inputs from the blender; and a controller communicatively coupled to the motor and the capture component, the controller configured to: instruct the at least one sensor to capture the one or more sound and/or vibration inputs from the blender, compare the one or more sound and/or vibration inputs to a threshold parameter, and instruct the motor to reduce power when the one or more sound and/or vibration inputs exceed the threshold parameter.

The system according to any one of the previous clauses, further comprising an interface communicatively coupled to the controller.

The system according to any one of the previous clauses, wherein the interface is a user device interface.

The system according to any one of the previous clauses, wherein the interface is a user interface of the blender.

The system according to any one of the previous clauses, wherein the controller is further configured to: receive, via the interface, an input to initiate the quiet blending mode; and engage the quiet blending mode to capture the one or more sound and/or vibration inputs.

The system according to any one of the previous clauses, wherein the at least one sensor comprises a microphone.

The system according to any one of the previous clauses, wherein the at least one sensor comprises an accelerometer.

The system according to any one of the previous clauses, wherein the controller is further configured to complete the capturing, the comparing, and the transmitting continuously to form a feedback loop.

The system according to any one of the previous clauses, wherein the controller is further configured to transmit a second command to the motor to increase power when the one or more sound and/or vibration inputs are below the threshold parameter.

The system according to any one of the previous clauses, wherein the controller is configured to transmit the command to the motor in accordance with a blender program.

A blender, comprising: a motor; and a controller communicatively coupled to the motor and configured to: capture, via at least one sensor, one or more sound and/or vibration inputs from the motor, compare the one or more sound and/or vibration inputs to a threshold parameter, and instruct the motor to reduce power when the one or more sound and/or vibration inputs exceed the threshold parameter.

The blender according to any one of the previous clauses, further comprising: an interface communicatively coupled to the controller, wherein the controller is further configured to: receive, via the interface, an input to initiate the quiet blending mode; and engage the quiet blending mode to capture the one or more sound and/or vibration inputs.

The blender according to any one of the previous clauses, wherein the controller is further configured to transmit a second command to the motor to increase power when the one or more sound and/or vibration inputs are below the threshold parameter.

## Claims

**1.** A method of instituting a quiet blending mode, the method comprising:
capturing, via at least one sensor, one or more sound and/or vibration inputs from a blender;
comparing the one or more sound and/or vibration inputs to a threshold parameter; and
transmitting a command to a blender motor to reduce power when the one or more sound and/or vibration inputs exceed the threshold parameter.

**2.** The method according to claim 1, further comprising:
receiving, via an interface, an input to initiate the quiet blending mode; and
engaging the quiet blending mode to capture the one or more sound and/or vibration inputs.

**3.** The method according to claim 1 or claim 2, wherein the at least one sensor comprises a microphone.

**4.** The method according to claim 1 or claim 2, wherein the at least one sensor comprises an accelerometer.

**5.** The method according to any one of the previous claims, wherein the capturing, the comparing, and the transmitting are continuously completed to form a feedback loop.

**6.** The method according to any one of the previous claims, further comprising transmitting a second command to the blender motor to increase power when the one or more sound and/or vibration inputs are below the threshold parameter.

**7.** The method according to any one of the previous claims, wherein transmitting the command to the blender motor is in accordance with a blender program.

**8.** A system for instituting a quiet blending mode, the system comprising:
a blender comprising a motor;
a capture component comprising at least one sensor configured to capture one or more sound and/or vibration inputs from the blender; and
a controller communicatively coupled to the motor and the capture component, the controller configured to:
instruct the at least one sensor to capture the one or more sound and/or vibration inputs from the blender,
compare the one or more sound and/or vibration inputs to a threshold parameter, and
instruct the motor to reduce power when the one or more sound and/or vibration inputs exceed the threshold parameter.

**9.** The system according to claim 8, further comprising an interface communicatively coupled to the controller.

**11.** The system according to claim 9, wherein the interface is a user device interface or a user interface of the blender.

**12.** The system according to claim 11, wherein the controller is further configured to:
receive, via the interface, an input to initiate the quiet blending mode; and
engage the quiet blending mode to capture the one or more sound and/or vibration inputs.

**13.** The system according to any one of claims 8-12, wherein the at least one sensor comprises a microphone and/or an accelerometer.

**14.** The system according to any one of claims 8-13, wherein the controller is further configured to transmit a second command to the motor to increase power when the one or more sound and/or vibration inputs are below the threshold parameter.

**15.** The system according to any one of claims 8-14, wherein the controller is configured to instruct the motor in accordance with a blender program.
